# DEMANDE DE BREVET EUROPEEN

(11) **EP 2 770 765 A1**
(43) Date de publication de la demande: **27.08.2014**
(21) Numéro de dépôt: 14155594.6
(22) Date de dépôt: 18.02.2014
(51) Int. Cl.: H04W 8/08, H04W 8/02, H04L 29/12

(54) **Système d'évasion IP locale pour mobiles en itinérance sans changement de configuration du téléphone.**

(30) Priorité: 20.02.2013 FR 1351461
(71) Demandeur: Halys, 92130 Issy les Moulineaux (FR)
(72) Inventeur: Henry-Labordere, Arnaud, 75007 Paris (FR); Cruaux, Sébastien, 94320 Thiais (FR); Duporche, Gilles, 75015 Paris (FR)
(74) Mandataire: Cabinet HERRBURGER

(57) **Abrégé**

Système comportant un serveur RADIUS dans le réseau visité (VPLMN) qui enregistre les souscripteurs aux services avec leur profil. A l'émission d'un message par un mobile, le module de routage (110) vérifie si le message vient d'un souscripteur. Dans la négative, le message passe sans intervention. Si le message vient d'un souscripteur, un module d'analyse (120) du routeur vérifie le profil et les services auxquels il a droit. Le routeur recherche l'adresse de destination dans sa base de données (140, 160, 170) et la retourne au souscripteur. Pour la recherche, le routeur remplace l'adresse source du mobile par son adresse source pour recevoir la réponse et la transmettre au souscripteur. Le module de calcul (130) recalcule la somme de contrôle du message. Une table de concordance 150 contient l'adresse source du souscripteur et l'adresse de substitution pour permettre au routeur de transmettre les réponses du site vers le souscripteur.

## Description

### Domaine de l'invention

La présente invention a pour objet un système d'évasion IP locale pour mobiles en itinérance sans changement de configuration de téléphone.

### Etat de la technique

Actuellement, lorsqu'un mobile est en itinérance dans un réseau visité VPLMN, lorsqu'il veut accéder à un site Internet, sa requête est transmise vers la passerelle GGSN de son réseau HPLMN. Puis cette requête est transmise vers le site visité avec comme adresse IP source, une adresse attribuée par ce GGSN. La réponse du site est alors dirigée par le réseau Internet vers ce GGSN qui le retransmet au mobile par le SGSN, à travers un « tunnel » créé entre le SGSN et GGSN.

L'échange se fait donc toujours à travers la passerelle GGSN du réseau HPLMN du mobile de l'abonné, ce qui correspond à une transmission coûteuse et longue.

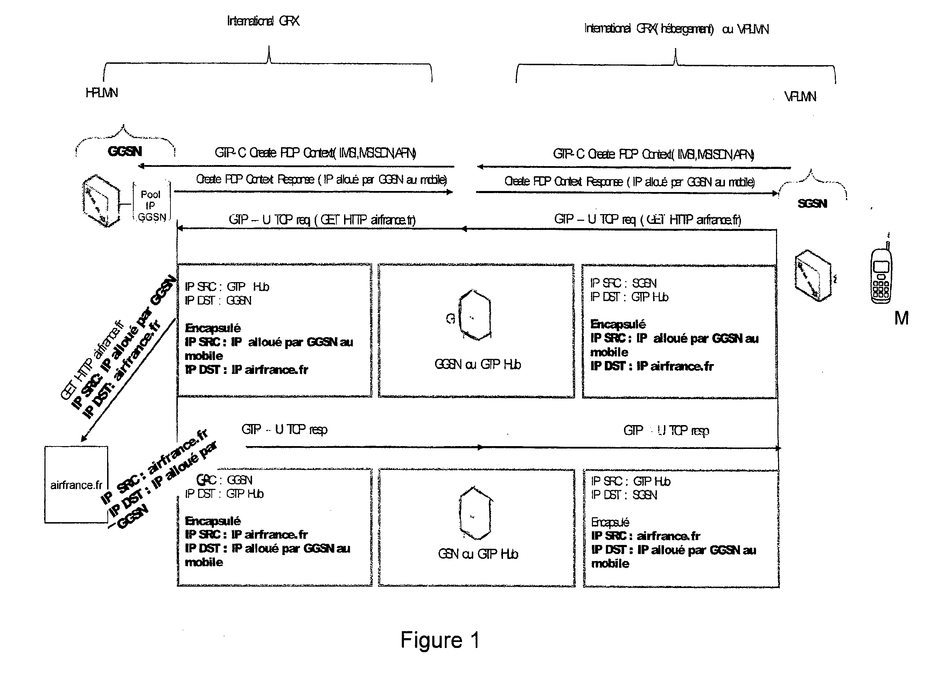

Le schéma connu (figure 1) permettant le service de données (consultation Internet, accès aux messages multimédia) montre que l'accès passe toujours par le réseau HPLMN du mobile en itinérance même si le site visité était dans le pays visité par le mobile. Cette opération est appelée généralement « trombonage », c'est-à-dire que les messages suivent un chemin en boucle ouverte avec aller et retour comme une épingle à cheveux. Le mobile en itinérance est alors facturé par l'opérateur de son réseau HPLMN, lui-même recevant une facture du VPLMN.

Le BEREC (Body of European Regulators for Electronic Communications) a préparé pour le Commission Européenne des spécifications pour une nouvelle règlementation applicable le 1er juillet 2014. Elle permettra le "découplage", c'est à dire la vente séparée du service d'itinérance. Ceci permettra que des "fournisseurs alternatifs" (ARP) vendent le service d'itinérance de façon à ce que ce service soit plus économique mais ne concerne que les services de données avec utilisation d'un seul IMSI (les systèmes bi-IMSI ne sont pas considérés comme assez commodes pour le marché visé), et non la voix et les SMS que le BEREC considère aussi comme peu pratiques. Le modèle économique de l'évasion locale (LBO "Local Break-Out" en anglais) consiste en la fourniture du service de données par le réseau visité sans l'intervention du HPLMN si ce n'est l'authentification de la carte SIM. Dans le modèle BEREC, après avoir acheté le service LBO auprès du VPLMN, le visiteur en itinérance configurerait un point d'accès APN commun "EUinternet". L'ARP pourrait éventuellement faciliter cette configuration avec un serveur OTA (ce qui est difficile car certains téléphones comme Iphone et Blackberry ne suivent pas le standard OMA). De plus la configuration initiale devrait être restaurée quand le visiteur retourne chez lui. Techniquement la passerelle SGSN du réseau VPLMN peut être configurée avec ce point d'accès APN "EUinternet" indépendamment de sa présence dans le profil du HLR. Il serait logique cependant que ce point d'accès APN soit systématiquement inclus dans les profils HLR des réseaux européens. Il n'y a pas besoin d'une réalisation spéciale dans le VPLMN et le GGSN ou la PDN Gateway (4G) standard du VPLMN qui peut fournir l'accès local à Internet, car les visiteurs se connectent au GGSN visité de réalisation standard.

### But de l'invention

La présente invention a pour but de développer un système d'accès au réseau Internet pour réduire le coût et améliorer cet accès pour un mobile en itinérance ; que ce site soit un site particulier, ou plus généralement des sites interrogés par le mobile en itinérance, à partir du seul nom de domaine du site et cela sans besoin de modifier la configuration du téléphone des visiteurs qui utilisent le service, ni dans le réseau VPLMN, ni quand ils retournent dans leur réseau. Ce système fournit le service européen de LBO (évasion locale statique) sans changement de point d'accès APN dans le téléphone et aussi pour des services donnés définis par un port « données » que ce soit de type UDP ou TCP pour que les souscripteurs du service puissent bénéficier de l'évasion locale. Les souscriptions peuvent être gérées par le réseau visité VPLMN et le service être payé.

### Exposé et avantages de l'invention

A cet effet, la présente invention a pour objet un système d'évasion locale, c'est-à-dire à partir du seul réseau visité et non en repassant par le réseau de l'abonné. Les souscripteurs s'inscrivent chez le VPLMN :
- soit pour tous leurs accès internet (évasion locale statique) comme proposé par la méthode BEREC,
- soit pour certains sites privilégiés définis par leurs URL (évasion locale dynamique),
- soit pour certains services, comme la VoIP, définis par des numéros de port UDP ou TCP (évasion locale dynamique),
- pour les autres accès de données (MMS par exemple), pour les autres URL et services, les souscripteurs continuent à passer par le HPLMN sans évasion locale.

Le système d'évasion locale comprend un routeur à l'interface d'accès au service de données d'un réseau (réseau visité par un mobile) VPLMN, comprenant :
- un serveur Radius dans lequel sont enregistrés les souscripteurs définis par leur numéro MSISDN, les URL ou les services auxquels ils ont souscrit pour l'évasion locale,
- un module de routage recevant et transmettant les messages échangés entre le mobile en itinérance M dans le réseau visité VLMN et le site Internet,
- un module d'analyse pour analyser les messages arrivant dans le module de routage,
- un module de calcul recalculant les sommes de contrôle des messages dont l'adresse IP source a été modifiée, pour la remplacer par les sommes de contrôle corrigées.
- une base de données contenant des adresses IP destination de certains sites définis par leur nom de domaine, sites sélectionnés par certains souscripteurs pour l'évasion locale « dynamique » car ils les utilisent fréquemment.
- le module d'analyse analysant l'adresse IP de destination et l'adresse IP source d'un message en provenance du souscripteur M pour vérifier s'il s'agit d'un souscripteur et connaître les services auxquels il a droit :
   * laisser passer le message vers le réseau HPLMN du mobile si le message est adressé à une adresse IP destination non souscrites (pas d'évasion locale),
   * envoyer un message vers l'adresse IP destination si celle-ci fait partie de la souscription, directement sans passer par le réseau HPLMN, en attribuant au message comme adresse IP source une de celles du module de routage et en inscrivant la correspondance entre cette adresse et l'adresse remplacée dans le message, dans la base de données et pour faire la substitution inverse pour la réponse reçue par le module de routage pour envoyer le message de réponse au souscripteur,
   * interroger la base de données du système d'évasion pour y rechercher l'adresse IP du nom de domaine ou du service demandé,
      ** transmettre le message à l'adresse IP trouvée en indiquant comme adresse IP source une de celles du module de routage et en inscrivant la concordance des deux adresses dans la base de données,
      ** interroger le serveur de nom de domaine DNS si la base de données ne connaît pas ce nom de domaine en indiquant comme adresse IP source celle du module de routage et en inscrivant la concordance des deux adresses dans la base de données,
   * le module de calcul recalculant les sommes de contrôle pour chaque message dont l'adresse IP source a été modifiée et remplacer les sommes de contrôle du message par les sommes ainsi calculées.

Le système d'évasion IP est un système d'évasion locale en ce que l'accès aux services internet se fait uniquement au niveau du réseau visité et non en repassant par le réseau de l'abonné.

Les souscripteurs payent l'ARP qui est le VPLMN en général pour un volume de X Megaoctets.

Cette évasion se fait systématiquement vers les sites dont le numéro MSISDN est dans la liste des souscripteurs enregistrée dans le serveur RADIUS du routeur d'évasion ou encore vers la liste des points d'accès APN du routeur ou encore si le site dépend du service Internet consulté ou du port TCP ou UDP décrivant le service demandé.

Si en revanche, le mobile demande un site à partir de l'adresse qu'il connaît et l'utilise dans son message et si cette adresse ne fait pas partie des listes du routeur d'évasion, le message suit le cheminement normal à travers le réseau du mobile.

Le routeur d'évasion selon l'invention permet ainsi dans le trafic Internet de reconnaître l'accès à Internet qui va être optimisé et celui qui est envoyé de manière classique vers la passerelle GGSN du réseau HPLM de l'abonné.

Dans une même session GPRS appelée « PDP Context », les accès à Internet pourront s'évader localement vers le site commercial du réseau VPLMN et dès qu'un accès est fait vers un autre site, le trafic est envoyé normalement avec un coût vers la passerelle GGSN de l'opérateur HPLMN.

### Dessins

La présente invention sera décrite ci-après de manière plus détaillée en référence aux dessins et à un mode de réalisation connu.
- La figure 1 est le schéma connu du service de données mobiles,
- la figure 2 présente les différents composants du système d'évasion locale IP selon l'invention,
- la figure 3 montre le schéma du service de données mobiles avec évasion IP locale selon l'invention.

### Description de modes de réalisation de l'invention

Le système d'évasion locale a pour but d'offrir à des souscripteurs la possibilité de bénéficier de services en évasion locale tels que :
- le tout Internet,
- des sites particuliers tels que par exemple Google,
- des services particuliers tels que VoIP.

Le souscripteur est un mobile qui visite un réseau VPLMN et achète le service d'évasion locale avec l'un ou l'autre ou toutes les possibilités d'accès à Internet auprès du réseau visité VPLMN. Le souscripteur et son profil sont inscrits dans le serveur Radius du réseau visité.

Lorsqu'un mobile demande une session de transmission de données, le réseau visité VPLMN vérifie tout d'abord s'il s'agit bien d'un souscripteur et il détermine le ou les services auxquels il a droit. Si le message ne correspond pas à un souscripteur, le message est directement transmis. Si le message correspond à un souscripteur mais non au service demandé, le message est également transmis à l'extérieur de façon habituelle. Si le message correspond à un souscripteur et un service demandé, le module d'évasion recherche la destination demandée, soit dans la base de données du système d'évasion, soit en interrogeant un nom de domaine. Une fois l'adresse IP du destinataire connue, le module d'évasion adresse le message du souscripteur à ce destinataire IP après avoir remplacé dans le message l'adresse IP source (celle du souscripteur) par l'adresse du module d'évasion constituant l'adresse source. La réponse du site destinataire est alors renvoyée au module d'évasion qui, dans le message ainsi reçu, remplace l'adresse de destination qui était la sienne par l'adresse IP du souscripteur et transmet le message au souscripteur dans le réseau VPLMN.

Pour cette opération vers l'extérieur, tant pour s'adresser à une adresse IP que pour revenir vers le souscripteur, le module d'évasion inscrit tout d'abord la correspondance entre l'adresse IP source du souscripteur et l'adresse IP source que le module d'évasion a affecté et substitue à l'adresse IP source du souscripteur avant d'envoyer le message vers le site destination IP.

En même temps, le module de calcul, calcule obligatoirement la nouvelle somme de contrôle avec la nouvelle adresse de destination et inscrit la nouvelle somme dans le message au niveau de l'entête IP et de l'en-tête TCP. La même opération est faite au retour du message avant l'envoi vers le souscripteur.

Le système d'évasion locale IP comprend un routeur d'évasion équipant l'interface du réseau visité VPLMN par un mobile M appartenant à un réseau (opérateur) HPLMN.

Si le navigateur du mobile M a souscrit l'évasion locale et possède déjà l'adresse du site dans son cache et qu'il demande à y accéder, et que le routeur n'a pas encore l'adresse IP de ce site, l'opération se déroule normalement à travers le réseau HPLMN sans évasion locale par le réseau visité VPLMN.

Si en revanche, le navigateur utilise une adresse de site connue du routeur et demande une adresse de site à partir de ce nom de domaine, le routeur cherche cette adresse d'abord dans son serveur de nom de domaine DNS et si cette adresse n'est pas connue, il interroge un serveur de domaine extérieur DNS pour obtenir l'adresse du site et la communique au mobile M pour faire ensuite une évasion locale pour la session demandée par le mobile.

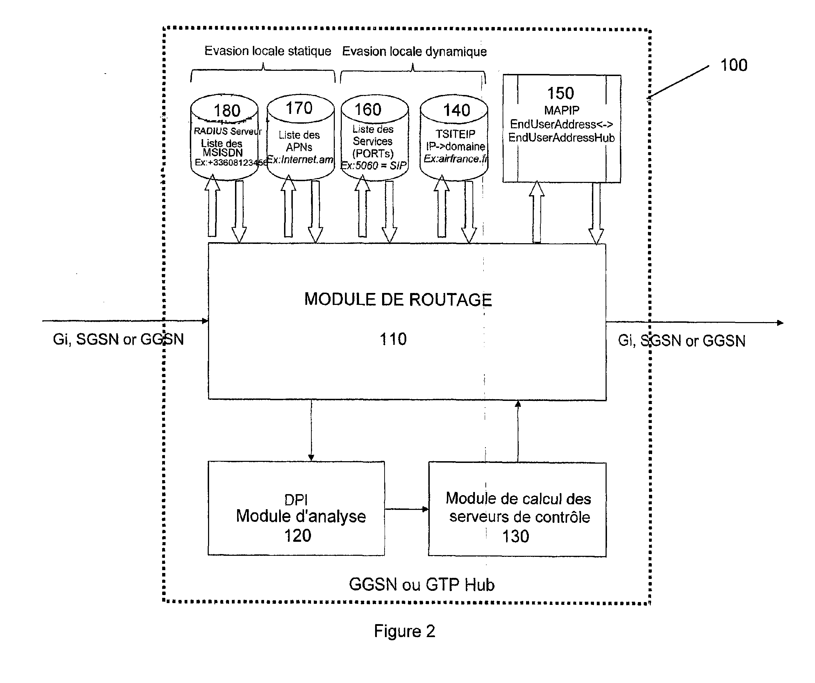

La figure 2 montre un routeur d'évasion locale 100 vers un site Internet équipant l'interface Internet Gi d'un réseau VPLMN visité par un mobile d'un réseau HPLMN. Le routeur d'évasion IP 100 comporte un serveur Radius 180 dans lequel sont inscrits les souscripteurs au service d'évasion locale et leur profil (services auxquels ils ont souscrit) et un module de routage 110 relié à un module d'analyse 120, lui-même relié à un module de calcul 130. Le module de routage comprend également une base de données 140 contenant des noms de domaine avec l'adresse des sites et une table de correspondance d'adresse 150.

Le routeur d'évasion IP 100 comporte également une liste de points d'accès APN et une liste de numéros MSISDN avec les noms de site et numéros de service souscrits. Le module de routage 110 reçoit des messages provenant des réseaux HPLMN et VPLMN pour les traiter le cas échéant en liaison avec les informations fournies par le module d'analyse 120, le module de calcul 130 ainsi que les informations des bases de données constituées par les adresses des sites, les listes de services, celles des points d'accès APN et celles des numéros ordinaires MSISDN pour réaliser l'évasion locale.

La table des adresses de sites 140 contient des noms de domaine connus du routeur et les adresses de ces sites. Cette base de données n'est pas figée et se complète au fur et à mesure dans les conditions expliquées ultérieurement.

La liste des services 160 contient des ports de service et non pas des adresses de sites, accessibles du réseau VPLMN ; la liste des points d'accès APN 170 contient des points d'accès accessibles du réseau VPLMN et la liste des numéros ordinaires MSISDN et celle de numéros particuliers pour le réseau VPLMN.

La table de correspondance 150 contient la correspondance entre les adresses sources ou adresses d'origine (« End Users Adress ») attribuées aux mobiles M visitant le réseau VPLMN et données par leur réseau HPLMN ainsi que les adresses provisoires attribuées à chaque mobile M dans les messages transitant vers l'extérieur du réseau VPLMN.

Le module d'analyse 120 analyse à la volée les messages et les requêtes qu'il reçoit du mobile souscripteur M :
Si le message contient déjà une adresse de site, il compare cette adresse aux adresses des listes 140, 160, 170 et s'il y a concordance, le routeur prend la main et assure l'évasion locale comme cela sera décrit ensuite.
Si le message contient une adresse qui ne fait pas partie des listes, le routeur n'intervient pas et laisse transiter le message vers le réseau HPLMN pour être traité par celui-ci de façon habituelle.
Si le message du mobile M contient une requête vers le serveur de nom de domaine DNS, le routeur compare tout d'abord le nom de domaine à la liste de la table des sites IP 140 et en cas de concordance avec un nom de domaine de la liste, il utilise l'adresse IP de cette liste et traite le message en évasion locale.
Si le nom de domaine ne se trouve pas dans la liste de la table 140, le module d'analyse 120 note l'adresse d'origine du mobile M et interroge le serveur de nom de domaine DNS directement par le routeur 100, sans passer par le réseau HPLMN du mobile M.

Le module de routage 110 reçoit en retour l'adresse du site et la transmet au mobile M qui communique ensuite en évasion locale avec ce site à travers le routeur d'évasion 100 sans passer par son réseau HPLMN.

Au passage, le module de routage inscrit l'adresse de ce site dans sa table 140.

L'échange des messages évoqués ci-dessus entre le mobile souscripteur M, le routeur d'évasion 100, le réseau HPLMN et le site se déroule selon l'invention dans les conditions suivantes :

Le message initial du mobile souscripteur M contenant déjà l'adresse du site (connue du navigateur du mobile M) est analysé par le module d'analyse 120 et si l'adresse n'est pas dans la liste du routeur (140, 160, 170), le message est transmis inchangé vers le réseau HPLMN.

Si l'adresse du message est connue du routeur d'évasion 100, celui-ci organise l'évasion locale pour que les échanges ne passent pas par le réseau HPLMN mais soient issus directement du routeur 100. Pour cela, le module de routage remplace dans le message entrant, provenant du module M, l'adresse source (adresse d'origine qui lui a été attribuée par son opérateur HPLMN) (End users adress) par une nouvelle adresse source qui est une adresse du routeur 100. Cette nouvelle adresse source et celle d'origine du mobile M sont enregistrées dans la table de correspondance 150. Le module de calcul 130 calcule la ou les sommes de contrôle pour cette nouvelle adresse source et les inscrit dans le message, en remplacement des sommes de contrôle qui avaient été calculées au départ du message avec l'ancienne adresse source.

Ensuite, le message est envoyé au site. La réponse reçue du site par le routeur d'évasion est traitée de manière réciproque par celui-ci puisque le routeur reçoit la réponse, son adresse source devenant l'adresse de destination de la réponse.

Le routeur remplace alors son adresse de destination qui était contenue dans le message par l'adresse d'origine du mobile qui devient l'adresse de destination. Il trouve cette adresse enregistrée dans la table de correspondance 150. Le module de calcul 130 calcule la ou les nouvelles sommes de contrôle qui seront inscrites dans le message. Le message de réponse peut alors être envoyé au mobile M.

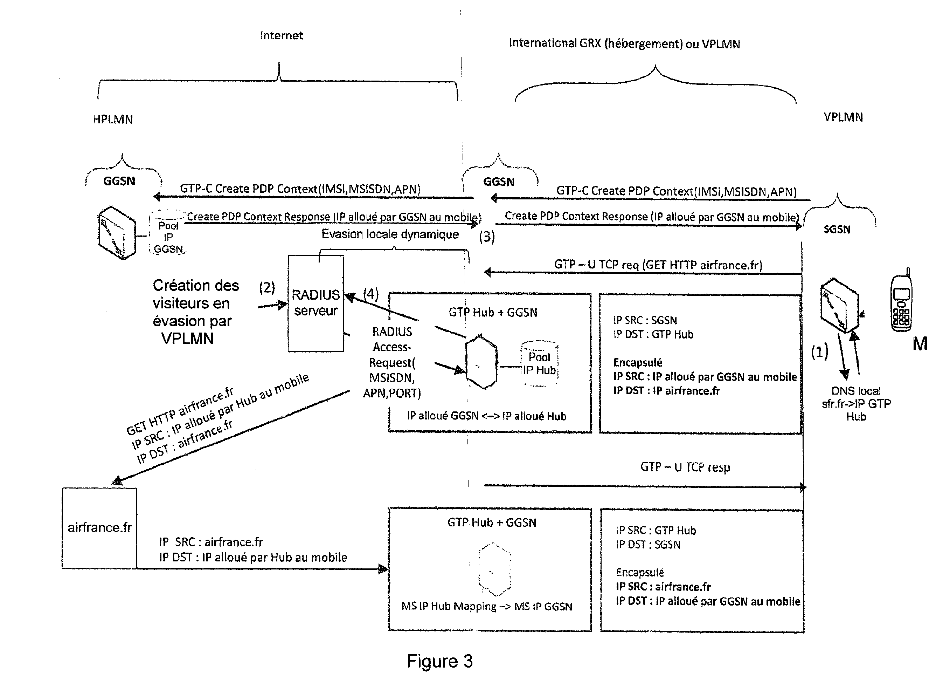

La figure 3 montre le schéma du service de données mobiles avec évasion locale selon l'invention, dans le cas où le routeur IP, appelé ici « GTP Hub » est capable d'envoyer directement le trafic vers Internet (« l'évasion locale »). Cette solution est facile à réaliser si tout le trafic internet est systématiquement l'objet d'une évasion locale *statique* par le GTP Hub. Par exemple, tout le trafic de certains numéros MSISDN, ou tout le trafic correspondant à certains points d'accès APN des visiteurs.

A l'étape 1, le VPLMN (c'est à dire l'ARP) déclare les points d'accès APN de tous ses partenaires de roaming au cas où leurs visiteurs voudraient bénéficier de l'évasion locale. Même s'ils n'ont pas souscrit, leur accès passe quand même à travers le routeur, mais vers leur HPLMN d'une façon transparente.

La base est un routeur « GTP Hub » est l'itinérance virtuelle. La caractéristique est que le trafic utilisateur (GTP-U) passe à travers et peut être relayé avec changement dans le contenu des paquets. A la différence du simple routeur pour le trafic des visiteurs dans le GGSN du VPLMN ; il peut, par exemple, changer dynamiquement l'adresse source des paquets IP.

Ensuite les visiteurs s'abonnent s'ils le souhaitent (ils deviennent « souscripteurs ») au service de LBO en choisissant éventuellement des adresses URL et des services. Ils peuvent le faire sur le site WEB du VLMPN avec une carte de crédit en ayant systématiquement l'accès local pour ce site (cet URL est dans la liste quel que soit le MSISDN). Le site inscrit le souscripteur, avec ses choix, dans le serveur RADIUS à l'étape 2.

A l'étape 3, le mobile se connecte vers son GGSN HPLMN à travers le routeur (session « Create PDP Context »). L'adresse IP principale (« EndUserAddress ») selon l'invention, lui est toujours attribuée par son GGSN. Si c'est un mobile Orange France, c'est une adresse du « pool » Orange France même si le mobile est à l'étranger

Mais le routeur interroge aussi (étape 4) le serveur RADIUS et si le MSISDN est celui d'un souscripteur, il attribue une autre addresse IP « EndUserAddressHub » qui servira pour l'évasion locale du souscripteur.

Il faut pouvoir reconnaître à la volée que l'accès Internet est vers un site choisi sélectivement par le souscripteur en ayant la liste de leurs adresses IP destination.

Selon l'invention, le système a une liste des sites internet « avec évasion IP locale dynamique » pour lesquels au tout premier démarrage, le système fait lui-même au départ une interrogation de son DNS pour initialiser la liste des adresses IP de ces destinations, par exemple

| | |
|---|---|
| www.google.fr | -> 173.194.34.24 |
| | -> 173.194.34.31 |
| | -> 173.194.34.23 |
| www.airfrance.fr | -> 108.174.146.20 |

dont les adresses IP constituent une table TSITEIP.

Si un paquet envoyé par le mobile (protocole TCP pour des requêtes HTTP, ou protocole UDP, les 2 protocoles IP possibles) a une de ces adresses de destination, le système fait l'évasion locale.

Cependant certains sites comme www.google.fr ont des dizaines d'adresses et ne les envoient pas toutes.

### Exemple de résultat de requête DNS

Pour accéder à un site internet si le mobile n'a pas l'adresse en cache, le navigateur interroge le DNS. On a un exemple ci-dessous de la réponse du DNS 212.27.40.240 pour www.google.fr, envoyée vers le mobile auquel son GGSN a attribué la EndUserAddress 192.168.0.52. Le PORT applicatif utilisé pour le protocole DNS et qu'on retrouve dans UDP Header source Port vaut 53. La réponse est encapsulée dans un message GTP-U. Selon une application de l'invention, il serait aussi possible de faire de l'évasion IP locale pour toutes les requêtes DNS au lieu de les relayer jusqu'au GGSN.

Cette procédure est détaillée par la trace d'analyse T1 donnée en fin de description.

Le système dispose d'un module appelé DPI dans l'invention et qui permet à la volée quand des requêtes DNS sont envoyées par les navigateurs des mobiles de capturer dans les réponses DNS comme celles, ci-dessus, des mises à jour de sa table TSITEIP du mobile. Le navigateur peut garder des adresses de sites dans son cache et ne pas faire une requête DNS. Si l'adresse du cache n'est pas contenue dans TSITEIP la navigation fonctionnera, mais sans évasion plus économique. Cependant, la table TSITEIP va se compléter au fur et à mesure.

Selon l'invention, chaque nouvelle adresse obtenue est ajoutée à la table TSITEIP qui est sauvegardée pour une prochaine demande.

Le module DPI permet aussi d'analyser le contenu des messages IP encapsulés ou pas, notamment l'adresse IP source.

### Description détaillée de la réalisation de l'évasion IP locale dynamique.

On reçoit un message venant du mobile via le SGSN, empaqueté dans un autre paquet IP (protocole GTP-U).

Cette procédure est explicitée dans la trace d'analyse T2 donnée en fin de description.

On extrait le message IP encapsulé et analyse l'adresse IP destination. Si l'adresse est l'une de celles de la table TSITEIP, on modifie l'adresse source en mettant à la place de EndUserAddress, *une adresse locale appartenant au système* soit EndUserAddressHub. Il y a une table MAPIP qui *est constituée au moment de la création du PDP Context,* « au cas où l'utilisateur accéderait un site avec évasion locale prévue comme www.arfrance.fr ou www.telna.com
EndUserAddress<->EndUserAddressHub

Ceci est expliqué précisément par les traces d'analyseur ci-dessous, où on voit un message (protocole GTP-U) arriver du SGSN. On le désencapsule et change l'adresse IP source qui était 192.168.0.52, en la remplaçant par 192.168.0.183. On part en évasion IP locale dynamique, tout le reste du message étant conservé à l'identique. Le message part donc vers le site www.airfrance.fr_qui_était l'adresse IP 108.174.146.20 retournée par le DNS et contenue (pas de modification) dans le paquet encapsulé reçu du SGSN.

Cette procédure est schématisée par la trace d'analyse T3 rappelée en fin de description.

Mais l'en-tête IP ainsi que les en-têtes TCP ou UDP contiennent *des* "*checksum*" qui *dépendent de l'adresse IP source notamment.* Ces "checksums" sont calculés par des fonctions standard des protocoles dans un but de sécurité. Si on gardait les checksums du paquet reçu, le message serait rejeté sur le réseau. Selon l'invention, ils sont recalculés (AB01 avant pour l'IP, AA7E après ; AE00 pour le TCP avant, AD7D après) et insérés dans le paquet émis directement vers www.airfrance.fr. On voit ci-dessus que le "checksum IP" et le "checksum TCP" ne sont pas les même que dans le paquet reçu du SGSN. De plus l'adresse IP Source a été changée et elle est maintenant une adresse allouée par le système objet de l'invention.

La réponse du site est envoyée vers cette adresse source et arrive donc au système puisque l'adresse *192.168.0.183* lui appartient.

Cette réponse se fait selon la trace d'analyse T4 se trouvant en fin de description.

Grâce à la table MAPIP, il la change en mettant EndUse-rAddress, soit 192.168.0.52 à la place.

Il empaquète la réponse dans un message IP du protocole GTP-U. Il recalcule les checksums (7DD4 pour l'IP avant, 7E57 après) et renvoie vers le mobile à travers le SGSN.

Ce schéma se retrouve dans la trace d'analyse T5 donnée en fin de description.

Le recalcul des checksum est fait par le module de calcul.

Si le mobile accède un service sans évasion locale comme l'accès aux messages multimédia MMS, l'APN n'est pas un APN internet et l'accès se fait normalement à travers le GGSN du HPLMN, avec comme adresse source « EndUser Address » et pas « EndUserAddressHub ». Les services multimédia ou « Blackberry entreprise » continuent à fonctionner.

Le système d'évasion IP locale comporte :
- un routeur 110 installé en entrée/sortie du réseau visité HPLMN traversé par les requêtes des mobiles visitant le réseau,
- une base de données 140, 160, 170 avec au moins l'une des listes de données suivantes:
   * adresse IP de domaine,
   * numéro MSISDN constituant une liste blanche des souscripteurs de l'évasion locale,
   * liste de services APN,
   * liste de ports de service,
- un tableau de correspondance d'adresses 150 reliant les adresses sources des mobiles souscripteurs en itinérance aux adresses attribuées par le réseau visité SGSN.

Le système d'évasion locale dynamique concerne non pas un site donné, mais un service donné, par exemple la VoIP, défini par un PORT UDP ou TCP.

### ANNEXE 1

### Trace d'analyse T1

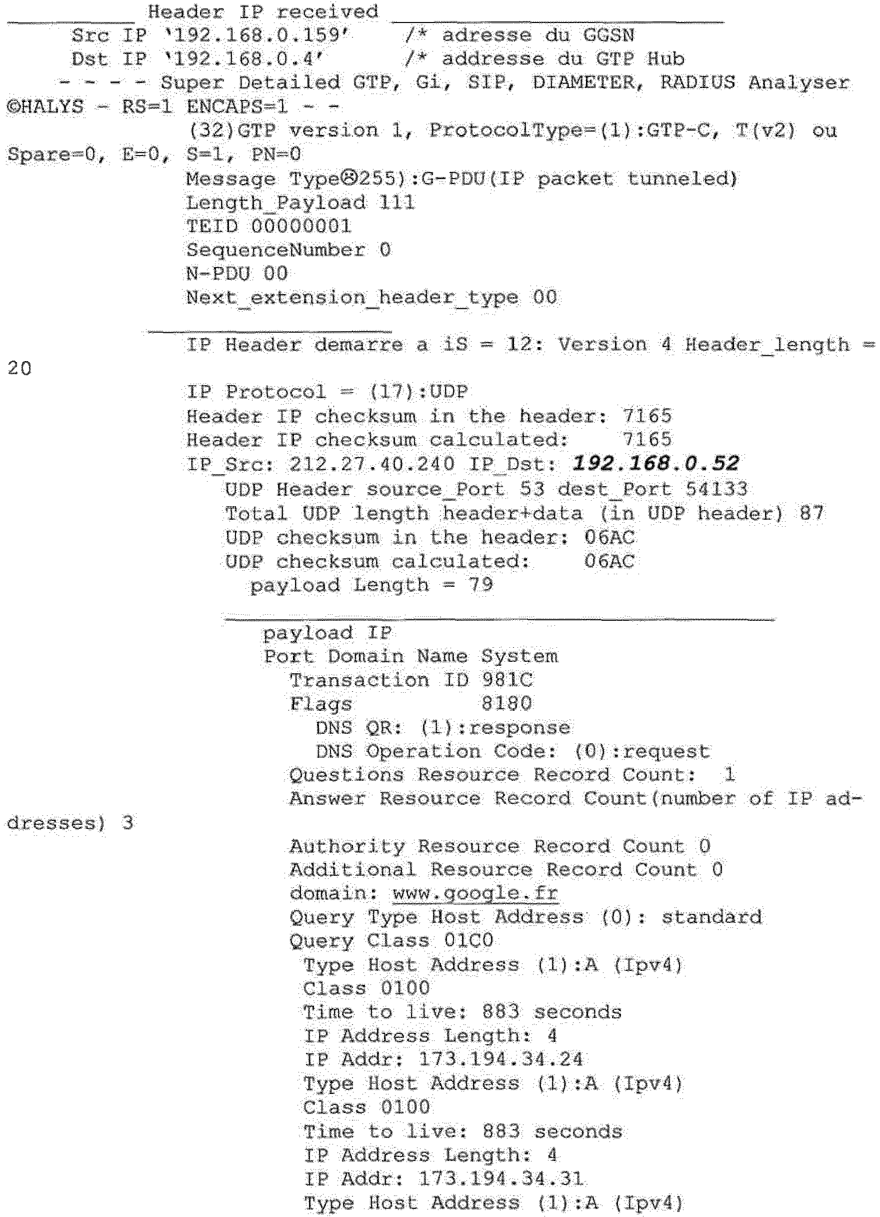

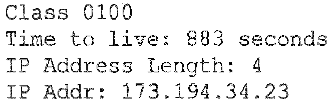

### ANNEXE 2

### Trace d'analyse T2

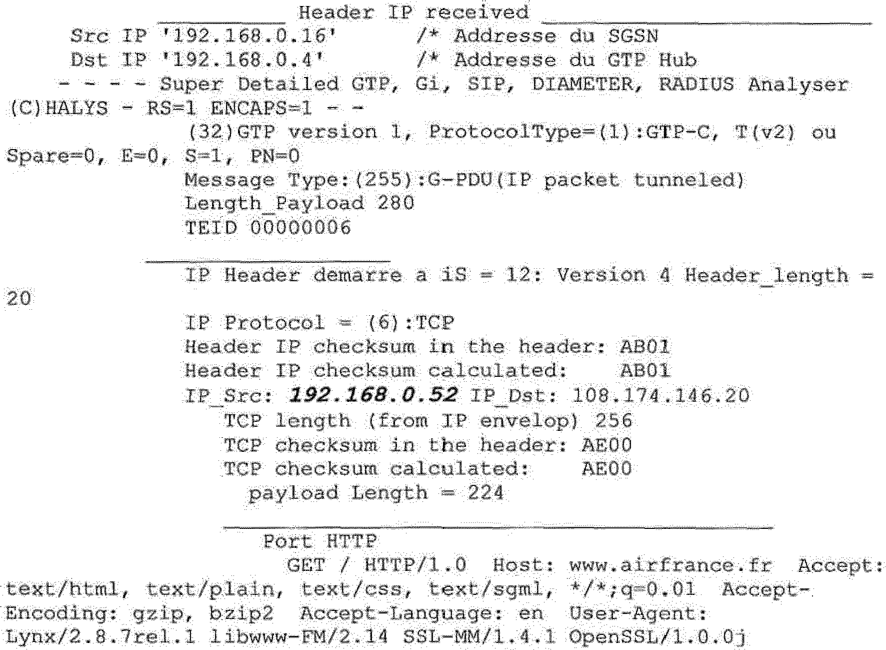

### ANNEXE 3

### Trace d'analyse T3

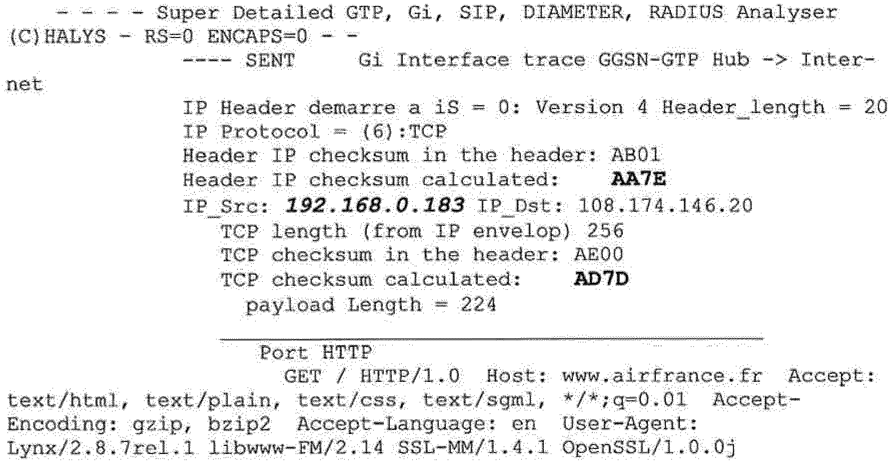

### ANNEXE 4

### Trace d'analyse T4

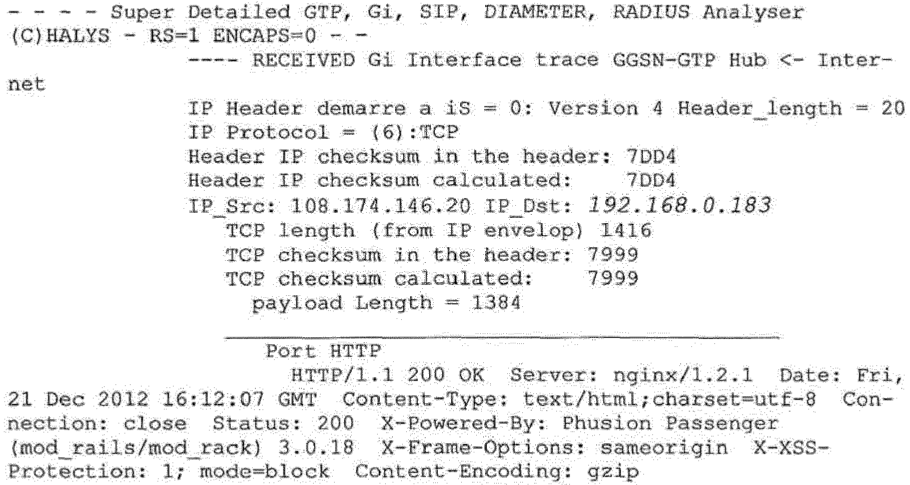

### ANNEXE 5

### Trace d'analyse T5

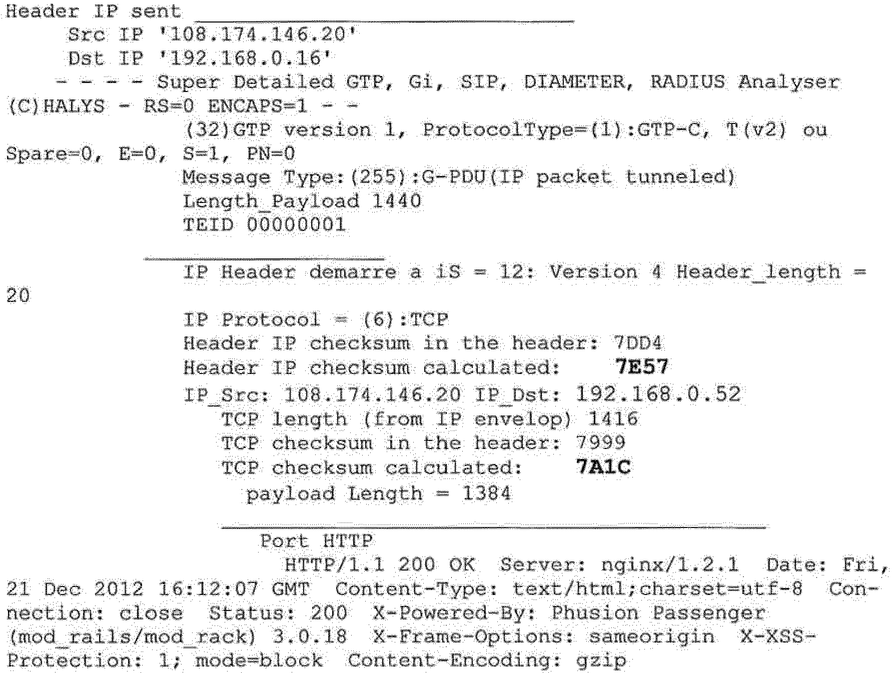

### GLOSSAIRE

Evasion IP locale : Procédé permettant au trafic de données d'un visiteur d'accéder directement Internet sans passer par le GGSN dans son opérateur.
Itinérance : (roaming). L'utilisation de la connexion « données » à l'étranger est souvent très couteuse.
APN (Access Point Name) point d'accès (internet.am, mms.sfr.fr). Nom, préconfiguré dans le mobile, du GGSN auquel le mobile se connecte pour un service de données. Le mobile peut être configuré à distance par un système OTA GPRS.
ARP : (alternate rooming provider) qui fournit le service d'évasion locale pour le compte de l'abonné en itinérance. Le VPLMN sera le plus souvent l'ARP.
Checksum : Somme de contrôle, mot de 16 bits calculé sur l'en-tête IP, UDP ou TCP pour assurer la sécurité des données. Il dépend de l'adresse source du paquet de données IP et dépend donc de celle-ci quand elle est modifiée.
DNS (Domain Name Server) Serveur de Noms de Domaine, Un protocole (utilisation du port standardisé 53) donne les adresses IP d'un service à partir d'un nom de domaine. Le serveur DNS ne retourne en général qu'une partie des adresses s'il y en a beaucoup, (par exemple plusieurs dizaines pour www.google.com).
DPI (Deep Packet Inspection). Opération consistant à décoder le contenu des messages IP transitant par un GTP Hub, un GGSN ou un PDN Gateway, pour reconnaître la nature du trafic (analyse des PORTS UDP ou TCP), et son contenu (URL du protocole HTTP).
End User Address, Adresse IP attribuée classiquement par le GGSN du HPLMN
End User Address Hub, Autre Adresse IP attribuée par le routeur, selon l'invention, si l'utilisateur est un souscripteur du service d'évasion locale.
Evasion locale dynamique, Evasion sélective pour certains URL et services, pas pour les autres.
Gi Interface Internet d'une passerelle GGSN ou d'un routeur GTP Hub avec évasion IP locale.
URL (Universal Register Location) adresse Internet (exemple http: // www.airfrance.fr)
HTTP « HyperText Transfer Protocol » : protocole utilisé pour interroger un site (GET) ou lui transférer des données (POST).
SGSN (Servicing GPRS Service Node) (fonction d'un MME en 4G). Système auquel est attaché un mobile pour le service de données par paquet.
GGSN (Gateway GPRS Service Node) Passerelle pour l'accès aux services internet située dans le HPLMN de l'abonné mobile. Elle attribue au mobile une adresse dynamique appelée « End User Address », du protocole GTP.
GTP Hub GPRS Transfer Protocol (GTP) Hub. Se comporte comme une passerelle GGSN vis à vis du système SGSN et réciproquement en transformant puis relayant entre le SGSN et le GGSN les messages du protocole GTP. Cette transformation concerne les adresses IP des équipements et les numéros IMSI ou MSISDN dans le cas d'un GTP Hub « multi-IMSI ».
GTP-C : Protocole de contrôle GTP (Create PDP Context, Delete PDP Context, etc...).
GTP-U : Protocole Utilisateur GTP, qui est une encapsulation dans un datagramme UDP du message IP venant ou arrivant au mobile.
IMSI (International Mobile Subscriber Identity). On distingue IMSI auxiliaire (celle d'un « sponsor » affectée au mobile pour bénéficier de l'itinérance dans certains VPLMN, et l'IMSI nominale toujours utilisée dans le HPLMN.
MSISDN : numéro ordinaire d'un abonné (commence par 33 pour un numéro français, 44 pour un numéro UK)
LBO (Local Break Out) Evasion locale statique ou dynamique (sites ou services IP particuliers) selon l'invention
PDN Gateway : Equivalent d'une passerelle GGSN pour les réseaux 4G LTE. Utilise le protocole GTP v2.
HPLMN Réseau de l'opérateur du mobile.
VPLMN Réseau de l'opérateur visité par un mobile, notamment à l'étranger.
IP Format de paquets et protocole. L'en-tête comporte une somme de contrôle (checksum) qui dépend de l'adresse source IP. Le message IP encapsule un message d'un autre protocole UDP ou TCP principalement.
UDP Mode de transmission de paquets IP par datagramme sans connexion : par exemple le protocole DNS.
TCP Mode de transmission connecté de paquets IP de bout en bout entre un navigateur et un site Internet : par exemple le protocole HTTP de navigation.
OTA (Over The Air). Opération de changement à distance des points d'accès APN notamment dans un mobile.
VoI Service de Voix sur IP (utilisant le port UDP 5060 pour la signalisation SIP et les ports RTP pour la parole (ports UDP > 17000)

## Revendications

1. Système d'évasion locale (IP) comprenant un routeur (100) à l'interface d'accès au service de données d'un réseau (réseau visité par un mobile) (VPLMN), comprenant :
- un serveur RADIUS (180) dans lequel sont enregistrés les mobiles souscripteurs (M) définis par leur numéro MSISDN, les noms de site et les services IP auxquels ils ont souscrit pour l'évasion locale,
- un module de routage (110) recevant et transmettant les messages échangés entre le mobile en itinérance (M) dans le réseau visité (VLMN) et le site Internet,
- un module d'analyse (120) pour analyser les messages arrivant dans le module de routage (110),
- un module de calcul (130) recalculant les sommes de contrôle des messages dont l'adresse IP source a été modifiée pour la remplacer par les sommes de contrôle dans le message,
- une base de données contenant des adresses IP connues et/ou choisies par le réseau visité (VPLMN),
- le module d'analyse (120) analysant l'adresse IP de destination et l'adresse IP source d'un message en provenance du mobile pour vérifier s'il s'agit d'un mobile souscripteur (M) et connaître les services auxquels il a droit :
* laisser passer le message vers le réseau (HPLM) du mobile si le message est adressé à une adresse IP destination non souscrite,
* envoyer un message vers l'adresse IP destination si celle-ci fait partie de la souscription, directement sans passer par le réseau (HPLM), en attribuant au message comme adresse IP source celle du module de routage et en inscrivant la correspondance entre cette adresse et l'adresse remplacée dans le message, dans la base de données et pour faire la substitution inverse pour la réponse reçue par le module de routage pour envoyer le message de réponse au mobile souscripteur (M),
* interroger la base de données du système d'évasion pour y rechercher l'adresse IP du nom de domaine ou du service demandé,
** transmettre le message à l'adresse IP trouvée en indiquant comme adresse IP source celle du module de routage et en inscrivant la concordance des deux adresses dans la base de données,
** interroger le serveur de nom de domaine (DNS) si la base de données ne connaît pas ce nom de domaine en indiquant comme adresse IP source celle du module de routage et en inscrivant la concordance des deux adresses dans la base de données,
* le module de calcul (130) recalculant les sommes de contrôle pour chaque message dont l'adresse IP source a été modifiée et remplacer les sommes de contrôle du message par les sommes ainsi calculées.

2. Système d'évasion IP locale selon la revendication 1 comportant :
- un routeur (110) installé en entrée/sortie du réseau visité VPLMN, traversé par les requêtes des mobiles visitant le réseau,
- une base de données (140, 160, 170) avec au moins l'une des listes de données suivantes :
* adresse IP de domaine,
* numéro MSISDN constituant une liste blanche des souscripteurs de l'évasion locale,
* liste de services APN,
* liste de ports de service,
- un tableau de correspondance d'adresses (150) reliant les adresses sources des mobiles souscripteurs en itinérance aux adresses attribuées par le réseau visité (SGSN).

3. Système d'évasion locale dynamique suivant la revendication 1, **caractérisé en ce**
**que** le mobile souscripteur (M) du service a deux adresses IP, l'une attribuée par son GGSN, HPLMN, l'autre servant pour l'évasion locale et attribuée par la routeur (100), la première adresse servant pour les services sans évasion locale comme l'accès aux messages multimédia MMS.

4. Système d'évasion locale dynamique suivant la revendication 1, mais concernant non pas un site donné, mais un service donné, par exemple la VoIP, défini par un PORT UDP ou TCP.
